# EUROPEAN PATENT APPLICATION

(11) **EP 4 350 281 A1**
(43) Date of publication of application: **10.04.2024**
(21) Application number: 22020486.1
(22) Date of filing: 09.10.2022
(51) Int. Cl.: G01B 11/27, B62J 11/22, B62J 45/422, G01B 11/275, B25B 27/00

(54) **FASTENING SYSTEM WITH QUICK RELEASE MECHANISM FOR A CYCLE ALIGNMENT DEVICE**

(71) Applicant: Adeokun, Lawrence O., London E14 6JZ (GB)
(72) Inventor: Adeokun, Lawrence O., London E14 6JZ (GB)

(57) **Abstract**

Cycle alignment device with light beam source and quick release mechanism, the device being mountable to a bicycle at a designated location, for instance at a handlebar or at saddle rail, by means of said quick release mechanism that provides secure attachement.

## Description

The invention relates to Cycle alignment.

The object of the invention is to provide a Handlebar alignment tool that can be attached **securely and firmly with no movement,** thereby ensuring the tool does not move out of place during the process of use. Additionally, the mechanism by which it is attached securely must involve an element of **quick release.**

This is used to ensure the wheels are aligned properly in relation to the cycle. For accurate alignment, the central plane of the cycle (assuming the wheels are trued) must be parallel to the stem and perpendicular to the handlebar.

For a clear improvement on GB2486192, EP220204440, this invention adds a quick release element to the secure fitting described in the cited material.

This invention provides a device made from a rigid material, with an alignment chamber and a quick release mechanism. The alignment chamber encloses a light/beam source that could utilize lens/lenses to refine the light source.

The quick release mechanism enables the swift connection/attachment of the device with a secure and firm hold/grip.

The Quick Release Mechanism can be implemented as in various formats such as a ratchet mechanism, springs, straps or adhesion (including magnetism).

For the purpose of clarity and brevity, this application describes the Ratchet mechanism and the Spring mechanism.

The alignment chamber should be an integrated part of the tool, although, it can be made as a removable part.

It is essential that the device is made from a rigid material as this is vital in attaining an accurate alignment.

The actual invention can be varied in dimensions, material or implementation, depending on the required application.

It can also be manufactured as a single integrated unit or employ modular and changeable parts.

Please note that the diagrams are not to scale and are for illustrative purposes only.

There is no circuitry shown for the purpose of clarity of the illustrations.

The following section is a detailed explanation of a preferred embodiment of the invention with reference to the following graphical illustrations.
FIGURE 1 shows a perspective view of an embodiment of the invention consisting of a Ratchet Mechanism.
FIGURE 1a shows a perspective view of an embodiment of the invention consisting of a Spring Mechanism.
FIGURE 1b shows a perspective view of an embodiment of the invention with a pair of torsion springs as the Quick Release Mechanism.
FIGURE 2 shows a top view of an embodiment of the invention as per FIGURE 1.
FIGURE 2a shows a top view of an embodiment of the invention as per FIGURE 1a.
FIGURE 3 shows a cross-section view of the embodiment of the invention using a rotary ratchet and a ratchet catch.
FIGURE 3a shows a cross-section view of the embodiment of the invention using Springs.
FIGURE 4 shows a magnification of the Ratchet Mechanism.

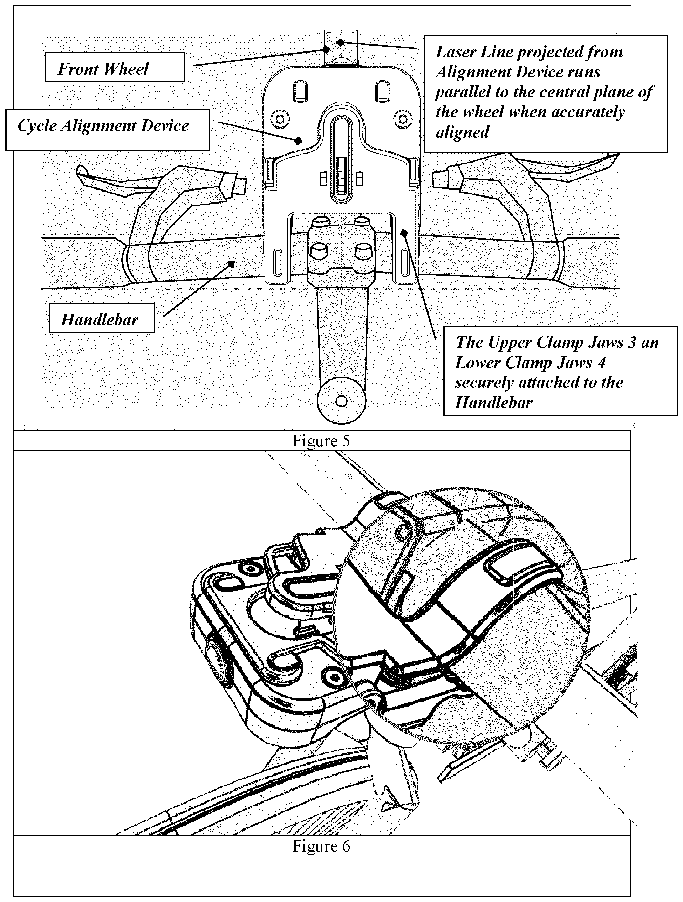

FIGURE 5 shows a top view of an embodiment of the invention when attached to the cycle handlebar. The light/beam source emitted is illustrated projecting on the central plane of the front wheel.
FIGURE 6 shows a magnification of an embodiment of the invention, illustrating the secure grip on the handlebars.

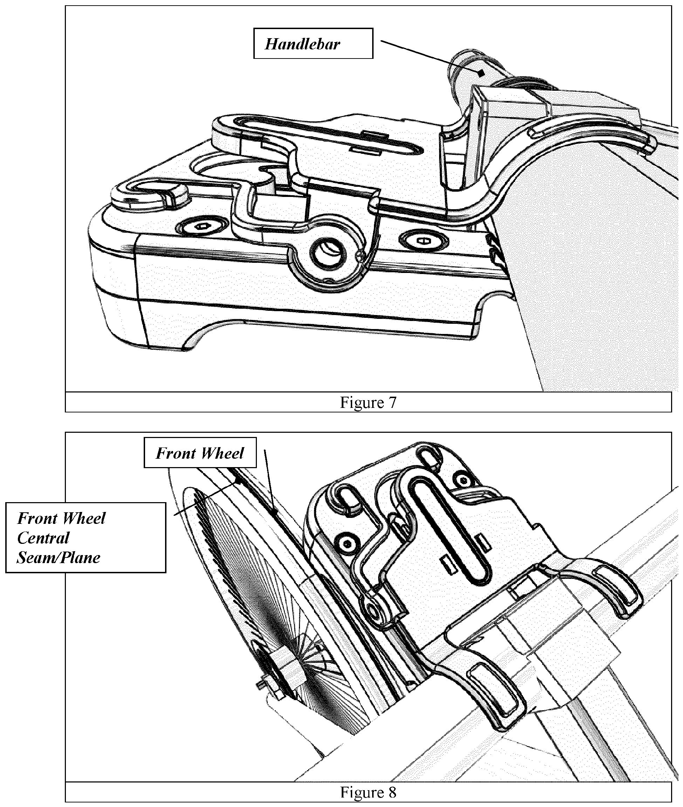

FIGURE 7 shows a side view of the embodiment of the invention attached to a handlebar.
FIGURE 8 shows a top perspective view of an embodiment of the invention when attached to the cycle handlebar. The light/beam source emitted is illustrated projecting on the central plane of the front wheel.

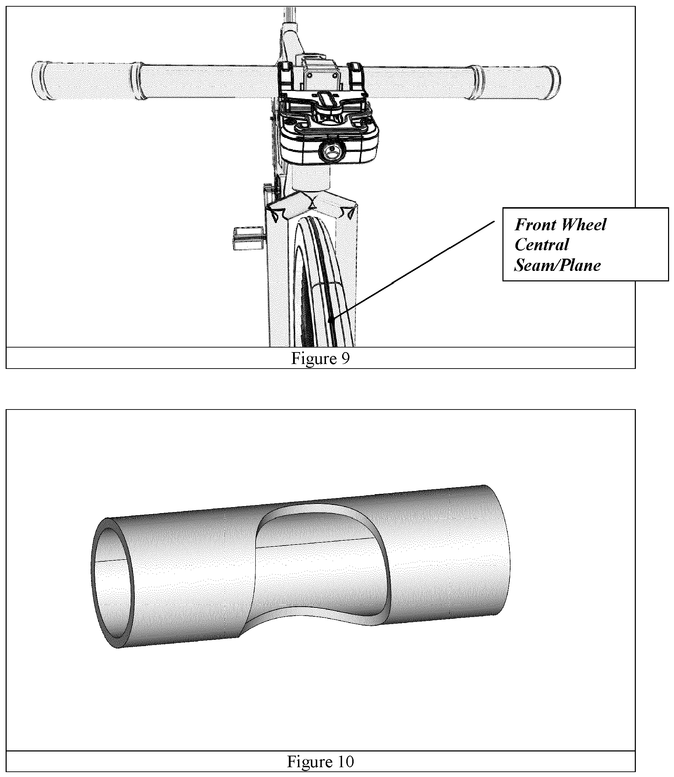

FIGURE 9 shows a front perspective view of an embodiment of the invention when attached to the cycle handlebar. The light/beam source emitted is illustrated projecting on the central plane of the front wheel.
FIGURE 10 shows the saddle post adapter.
FIGURE 11 shows the saddle post adapter in use. The cut-outs in Figure 10 are of different diameters. This allows the Saddle Post Adapter to fit on saddle posts of varying diameter.

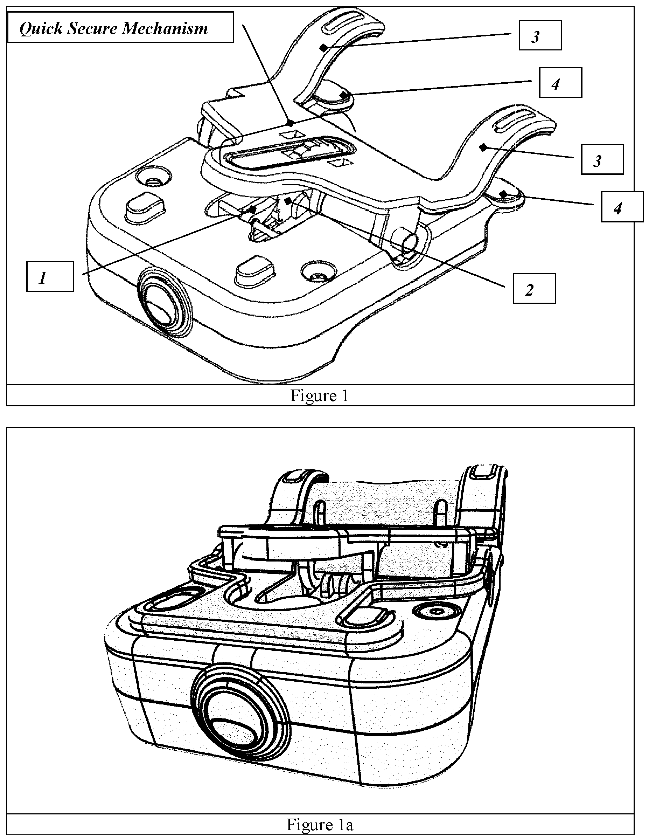

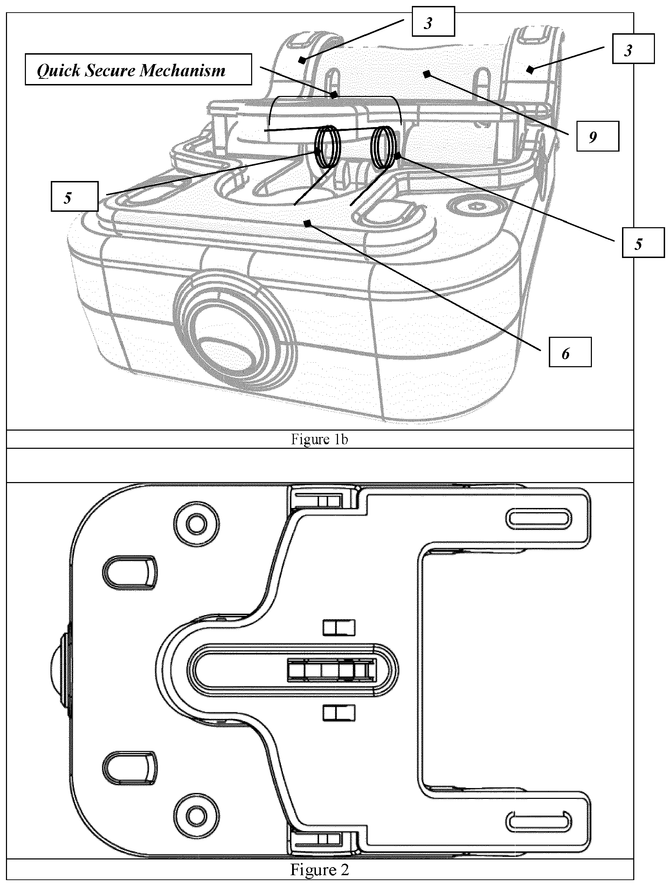

As shown in Figure 1, the Cycle alignment device comprises of at least one set of **Upper Clamp Jaws 3.** The **Upper Clamp Jaws 3** may be a permanent part of the device or be a removable mechanism. It may also accommodate a set diameter/dimension or varied.

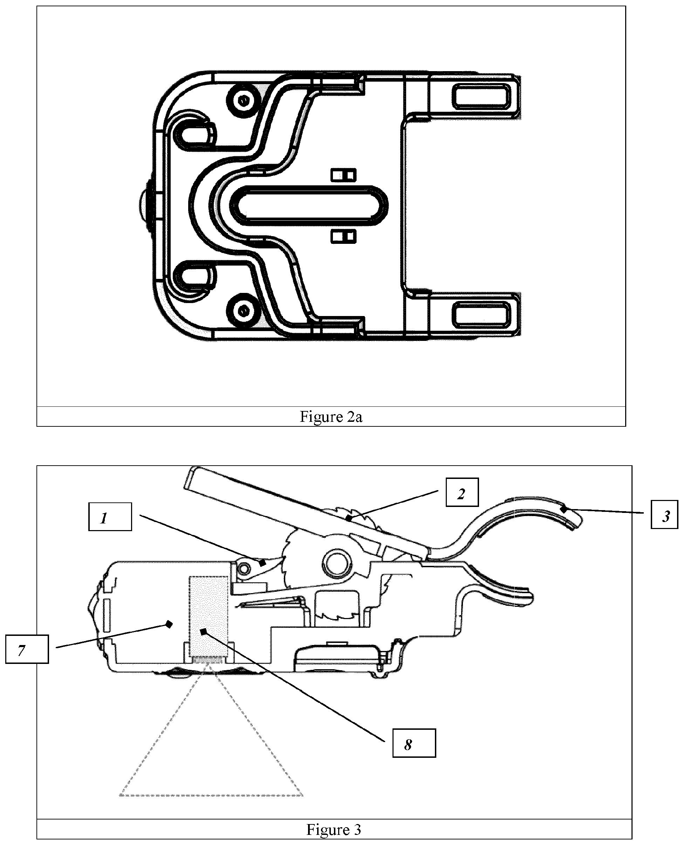

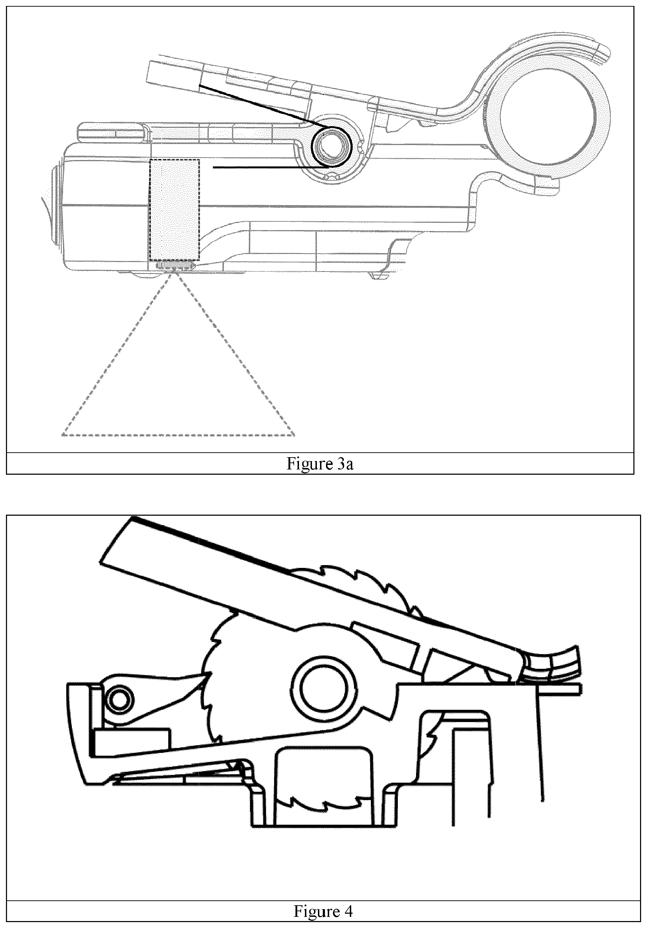

This **Alignment Chamber 7** houses the **Laser/Light Beam Source 8**, as can be seen in Figure 3 and Figure 3a. A lens may be used to further refine the light beam. In this illustration, the **Laser/Light Beam Source 8** is assumed to be a line-laser module. The straight line emitted runs parallel to the spine of the tool.

The Clamp for the **Upper Clamp Jaws 3** is fastened/released by a Ratchet Mechanism or a Spring Mechanism or other mechanism that allows a secure, yet quick release connection/attachment of the device.

There are two examples illustrated - one using a Ratchet Mechanism comprising at least of a **Ratchet Catch 1** and a **Ratchet 2.**

The other example uses a set of **Springs 5.**

In the case of the Ratchet Mechanism, the strength of the grip exerted by the **Upper Clamp Jaws 3** and/or **Lower Clamp Jaws 4** is altered by tightening/loosening the **Ratchet 2.**

The **Ratchet Catch 1** can be deactivate to enable the Quick release of the device.

In the case of the Spring mechanism, the strength of the grip exerted by the **Upper Clamp Jaws 3** and/or **Lower Clamp Jaws 4** is altered by compressing /decompressing the **Springs 5**. The strength of the **Springs 5** will also impact the strength of the grip.

A Strap or Adhesion mechanism could also be employed. Although these are not described in this application, the principle of secure connection/attachment and quick release must hold.

An embodiment of this invention need only have at least one form of secure connection/attachment and quick release.

Optional features of this invention are the **Saddle Rail Hook 6** and the **Saddle Post Adapter 9.**

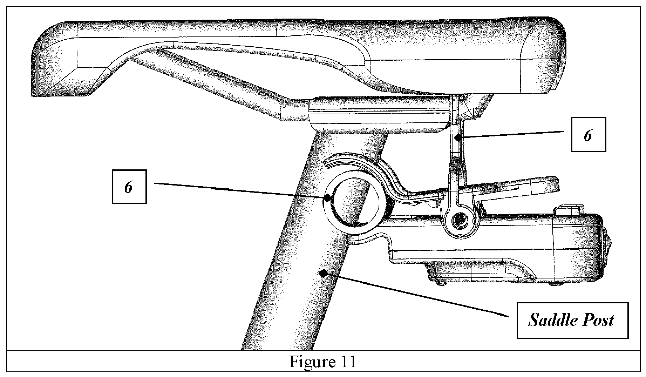

As can be seen from Figure 11, these two features can be used to align the saddle.

To achieve accurate alignment, the device is attached to the cycle at the stem mount region on the handlebar. The device is firmly fitted to the handlebar. The device should be ideally parallel to the ground when looking from the side.

The **Laser/Light Beam Source 8** is then activated and a line will be projected on the wheel. If the device is accurate, the line projected will run parallel to the spine of the device.

The central seam/plane of the tyre is then aligned parallel to the stem using the projected light (in this case a laser line) as a guide. Once aligned, the projected line will run parallel to the seam/plane of the tyre.

Although the **Alignment Chamber 8** is shown to be centrally aligned along the central plane of the tool, it can be located off-centre, as long as it still projects a light beam that runs parallel to the central plane.

## Claims

1. A device for aligning the a bicycle that comprises of a rigid body, a secure quick-release mounting mechanism and Laser/light beam source(s), mounted on the cycle with the projected laser/light beam running parallel to the central plane of the reference point (such as wheels or another part of the bicycle) to aid or ensure proper alignment of the handlebar in reference to the cycle or parts of the cycle.

2. A device as claimed in Claim 1 where the mounting mechanism can be activated/deactivated by a quick release mechanism in order to enable a tight and secure grip when attached to the designated part of the cycle.

3. A device as claimed in Claim 1 or Claim 2 where the device can be mounted in a fixed position on a designated part of the cycle (handlebar, saddle rail, handlebar stem or any other part of the cycle).

4. A device as claimed in any preceding claim, where the device employs the use of a combination of Laser/Light beam source/alignment gauge/screen/aperture that is connected/integral to the device, in order to align parts on the cycle (and related constituent parts) at a set angle in relation to one another, such as perpendicular alignment of the handlebar to the front wheel.

5. A device as claimed in any preceding claim where the mounting mechanism is an integral or removable part of the device.

6. A device as claimed in any preceding claim, which is made from a rigid inflexible/minimal flex material.

7. A device as claimed in any preceding claim where the constituent parts may be detachable.

8. A device substantially as described above and in the accompanying drawings.
**Key to Drawings**
1 = Ratchet Catch
2 = Ratchet
3 = Upper Clamp Jaws
4 = Lower Clamp Jaws
5 = Springs
6 = Saddle Rail Hook
7 = Alignment Chamber
8 = Laser/Light Beam Source
9 = Saddle Post Adapter
